# EUROPEAN PATENT SPECIFICATION

(11) **EP 3 570 394 B1**
(45) Date of publication and mention of the grant of the patent: **16.03.2022**
(21) Application number: 18172690.2
(22) Date of filing: 16.05.2018
(51) Int. Cl.: H02B 13/055, G01N 22/04, H01H 33/56

(54) **GAS INSULATED ELECTRICAL APPARATUS AND METHOD FOR MONITORING THE LOAD OF AN ABSORBER IN A GAS-INSULATED ELECTRICAL APPARATUS**
GASISOLIERTE ELEKTRISCHE VORRICHTUNG UND VERFAHREN ZUR ÜBERWACHUNG DER BELASTUNG EINES ABSORBERS IN EINER GASISOLIERTEN ELEKTRISCHEN VORRICHTUNG
APPAREIL ÉLECTRIQUE À ISOLATION GAZEUSE ET PROCÉDÉ DE SURVEILLANCE DE LA CHARGE D'UN ABSORBEUR DANS UN APPAREIL ÉLECTRIQUE À ISOLATION GAZEUSE

(43) Date of publication of application: 20.11.2019
(73) Proprietor: Hitachi Energy Switzerland AG, 5400 Baden (CH)
(72) Inventor: Kramer, Axel, 8057 Zürich (CH); Madonna, Gian-Luigi, 8112 Otelfingen (CH)
(74) Representative: Michalski Hüttermann & Partner Patentanwälte mbB

(56) References cited:
- DE-A1- 10 041 508
- FR-A1- 2 952 719
- JP-A- S59 230 413
- JP-B2- 3 972 606
- JP-U- S5 543 341

## Description

### Field of the disclosure

The present disclosure relates to a gas insulated electrical apparatus including an absorber for absorbing impurities present in the gas, and a method for monitoring the load of an absorber in a gas-insulated electrical apparatus.

### Technical background:

The functionality of gas-insulated electrical apparatuses, in particular the effectiveness of the electrical insulation, highly depends on the composition of the insulation gas.

The presence of impurities in the insulation gas can have adverse effects. A key impurity is water. The presence of water can be caused for example due to desorption of water from materials, in particular outgassing of insulators, or due to permeation of water from the outside.

The presence of water in the insulation gas can raise the dew point of the insulation gas. As a result, the minimum operating temperature of the gas-insulated electrical apparatus may be raised. The specified minimum operating temperature may be compromised.

Further impurities may be decomposition products of the insulation gas. Decomposition of the insulation gas may occur due to arcing or partial discharges in the gas-insulated electrical apparatus. The decomposition products may be toxic. The decomposition products may further be corrosive, in particular when water is present in the insulation gas, too.

To mitigate or eliminate these adverse effects, absorbers for absorbing the impurities are added to the gas chamber of the gas-insulated electrical apparatus.

Gas-insulated electrical apparatuses, like for example gas-insulated switchgear, require regular service checks to ensure safe operation. Traditionally, the quality of the insulation gas is analyzed during this service checks. In particular, the water concentration is measured. The measurement of the insulation gas composition is typically done via gas diagnostics. The gas diagnostics is performed with an analyzer on insulation gas extracted from the gas-insulated electrical apparatus.

The gas diagnostics requires a shut-down of the gas-insulated electrical apparatus. This leads to challenges for the scheduling of maintenance. It leads to difficulties in realizing short service intervals. The gas diagnostics is associated with a risk of gas loss due to leaks in the analyzer, in connectors or in the extraction tube. This may lead to a loss of the electrical insulation of the gas-insulated electrical apparatus.

The gas diagnostics is further associated with a risk of contamination of the insulation gas. Impurities, in particular water, may be transferred into the gas-insulated electrical apparatus during the gas diagnostics procedure. The gas diagnostics further require a large measurement time, in the order of 15 to 20 minutes. Furthermore, the costs of the analyzer are very high.

JP 3972606 B2 describes a gas-insulated switchgear including an adsorbent and an electrochemical device for determining a degree of deterioration of the adsorbent. The electrochemical device includes a detection electrode and a counter electrode.

DE 100 41 508 A1 describes a molecular sieve which is connected to a sensor for determining the degree of saturation of the sieve.

It is therefore an object of the present disclosure to overcome at least some of the above-mentioned problems in the prior art at least partially.

### Summary of the disclosure

The invention is defined by the features of the independent claims. Preferred embodiments are defined by the features of the dependent claims.

In view of the above, a gas-insulated electrical apparatus and a method for monitoring a load of an absorber in a gas insulated switch gear are provided.

According to an aspect of the present disclosure, a gas-insulated electrical apparatus is provided that includes a gas chamber filled with an insulation gas, an absorber for absorbing impurities present in the insulation gas, wherein the absorber is positioned in the gas chamber. The gas-insulated electrical apparatus further includes a monitoring device according to claim 1 for non-invasive monitoring of a load of the absorber.

According to another aspect of the present disclosure, a method according to claim 10 for monitoring a load
of an absorber for absorbing impurities present in an insulation gas is provided, wherein the absorber is positioned in a gas chamber of a gas-insulated electrical apparatus. The method includes non-invasively measuring a physical property of the absorber or of a compartment of the gas chamber in which the absorber is positioned. The physical property allows conclusions on the load of the absorber.

In the context of the present disclosure, non-invasive monitoring is in particular to be understood as monitoring without physically accessing the inside of the gas chamber of the gas-insulated electrical apparatus. In embodiments, non-invasive monitoring can be understood to be monitoring without extraction of any substance, in particular any gas, from the gas-insulated electrical apparatus.

An advantage is that information about the amount of impurities, in particular water, in the insulation gas can be obtained without a shut-down of the gas-insulated electrical apparatus. In particular, the information can be gathered during operation of the gas-insulated electrical apparatus. There is no risk of a gas loss. Furthermore, there is no risk of a contamination of the insulation gas with further impurities, in particular water. A further advantage is that the information gathering can be performed quickly, in particular faster than conventional gas diagnostics. The information gathering proceeds in an easy way. There is no need to provide physical access to the insulation gas from the outside of the gas-insulated electrical apparatus. In particular, the connection to the outside of the gas-insulated electrical apparatus is purely electronic. The costs of equipment may be markedly lower than the costs of the analyzer used during conventional gas analytics. The costs may be lower by about a factor of 100.

With the usual gas diagnostics procedure, no information about the current load of the absorber or about the absorber's currently available capacity to absorb further impurities is derived. This is due to the fact that as long as the absorber is not fully loaded, the amount of impurities, in particular water, in the insulation gas is at a constant, low value. For this reason, the usual gas diagnostics procedure is also not suitable for monitoring the current rate at which impurities are introduced into the insulation gas.

An advantage of the present disclosure is that information about the current load, in particular the free capacity and advantageously the loading rate of the absorber can be gained. The loading rate of the absorber allows conclusions on the rate at which impurities are introduced into the insulation gas. None of this information is accessible by conventional methods. Aspects of the information may improve the safety of the operation of the gas-insulated electrical apparatus. In particular, statements about the health of the gas-insulated electrical apparatus can be made. Service intervals may be timed more precisely.

The humidity in a gas-insulated electrical apparatus during operation can be influenced by the temperature of the gas-insulated electrical apparatus. A higher temperature leads to an increased humidity value, since the absorber, the insulators, and the surfaces of the gas-insulated electrical apparatus retain less water at higher temperatures than at lower temperatures. This effect is particularly pronounced when the gas-insulated electrical apparatus is operating at full load, in particular during periods of hot weather. To some extent, additional water released by the insulators or the surfaces of the gas-insulated electrical apparatus may be captured by the absorber (given sufficient time and depending on how saturated the absorber already is with water).

Nonetheless, particularly at high temperatures, an increase in humidity in the gas-insulated electrical apparatus may occur. In case of a rapid cooling down of the gas-insulated electrical apparatus, water may possibly condense in the gas-insulated electrical apparatus before the absorber is able to absorb the humidity released at the higher temperature. Such a rapid cooling down may for example occur when the load is switched off and/or the ambient temperature drops. A particular advantage of the present disclosure is that having information about the current load of the absorber can mitigate the risk of condensation of water in the gas-insulated electrical apparatus in scenarios as described above.

Further advantages, features, aspects and details that can be combined with embodiments described herein are evident from the dependent claims, claim combinations, the description and the drawings.

### Brief description of the Figures:

The details will be described in the following with reference to the figures, wherein
Fig. 1a is a schematic cross-sectional view of a gas-insulated electrical apparatus according to an embodiment of the disclosure.
Fig. 1b is a schematic cross-sectional view of a gas-insulated electrical apparatus according to another embodiment of the disclosure.
Fig. 1c is a schematic cross-sectional view of a gas-insulated electrical apparatus according to another embodiment of the disclosure.
Fig. Id is a schematic cross-sectional view of a gas-insulated electrical apparatus according to another embodiment of the disclosure.
Fig. 2 is a schematic representation of exemplary resonance curves of a cavity resonator as described in the present disclosure.

### Detailed description of the Figures and of embodiments:

Reference will now be made in detail to the various embodiments, one or more examples of which are illustrated in each figure. Each example is provided by way of explanation and is not meant as a limitation.

Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

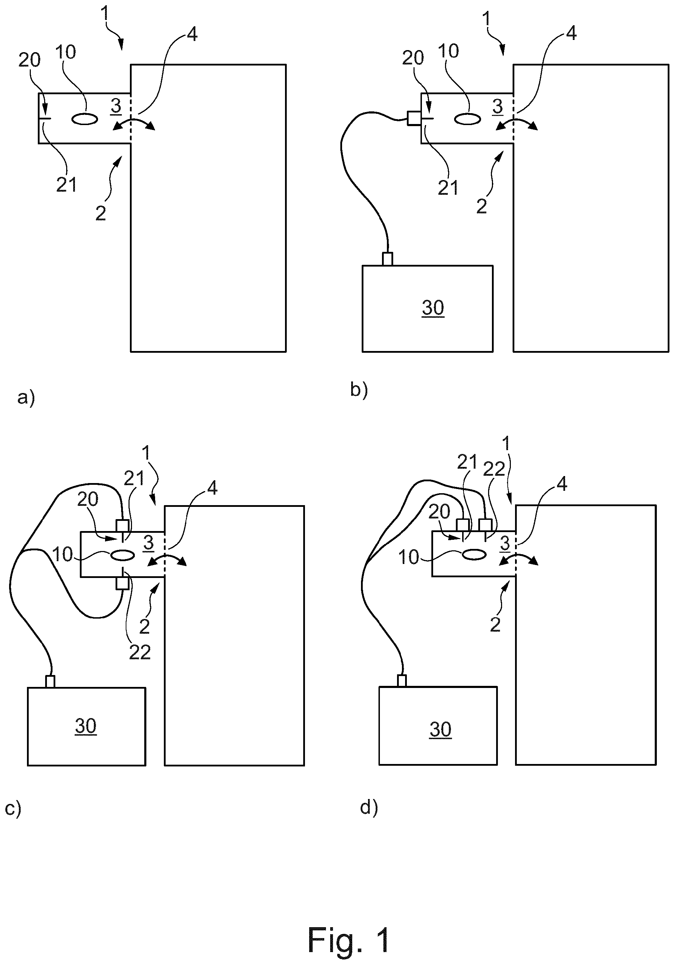

Fig. 1a is a schematic cross-sectional view of a gas-insulated electrical apparatus 1 according to an embodiment of the disclosure. The gas-insulated electrical apparatus 1 includes an absorber 10 for absorbing impurities present in an insulation gas. The absorber 10 is positioned in a gas chamber 2 of the gas-insulated electrical apparatus 1. The gas-insulated electrical apparatus further includes a monitoring device 20 for non-invasive monitoring of a load of the absorber 10.

The load of the absorber is in particular to be understood to be the amount of impurities absorbed by the absorber. The impurities may include water, in particular water in the gas phase. The impurities may further include corrosive and/or toxic gases.

The absorber may for example be embodied as a set of zeolite beads. Zeolites with a mean pore size of 5 Å can take up an amount of water equal to about 20% of their own mass. In the context of the present disclosure, the term "absorber" may in particular be used interchangeably with the term "adsorber".

The gas-insulated electrical apparatus may for example be a gas-insulated switchgear. A gas-insulated switchgear may include connecting elements (bus ducts, L-, T-, and X-connectors, angle connectors), voltage transformers, current transformers and bushings. Typically, a gas-insulated switchgear may also include surge arresters, disconnectors, earthing switches and parallel compensators.

In embodiments, the gas-insulated electrical apparatus may for example be a gas-insulated transformer, a gas-insulated line or a gas-insulated converter station. The gas insulated electrical apparatus may also be a gas-insulated bushing, a gas-insulated surge arrestor, a dead tank circuit breaker (DTB), a live tank circuit breaker (LTB) or a plug and switch system (PASS).

In embodiments, the gas-insulated electrical apparatus may also be an apparatus for medium voltage applications. For example, the gas-insulated electrical apparatus may be a secondary distribution ring main unit or a primary distribution gas-insulated switchgear.

The gas chamber 2 of the gas-insulated electrical apparatus may include a compartment 3. The absorber 10 may be positioned within the compartment 3. In embodiments, a metallic grid 4 is arranged between the compartment 3 and the rest of the gas chamber 2.

The monitoring device 20 includes an antenna 21. The antenna may protrude into the compartment 3.

According to the invention, the monitoring device includes one or more antennas. The one or more antennas are configured to be connectable to the interrogation unit. According to an aspect of the present disclosure, the monitoring device may be electrically connectable to the interrogation unit.

According to the invention, the antenna is connectable to the interrogation unit so as to allow for a transport of radio frequency , RF, electromagnetic radiation between the antenna and the interrogation unit. According to an aspect of the present disclosure, the monitoring device may include a connection to a waveguide (not shown). In embodiments, the monitoring device may include a feedthrough and/or a waveguide and/or a window for electromagnetic radiation, in particular radio frequency (RF) electromagnetic radiation.

The insulation gas may for example be SF6 or an eco-friendly alternative, in particular an insulation gas with low global warming potential.

Fig. 1b is a schematic cross-sectional view of a gas-insulated electrical apparatus 1 according to another embodiment of the disclosure. Only differences with respect to Fig. 1a are described.

The monitoring device 20 is configured to be connectable, in particular electrically connectable, to an interrogation unit 30. The monitoring device 20 is embodied as an antenna 21. The antenna 21 is be configured to transmit and receive RF electromagnetic radiation in connection with the interrogation unit 30.

The monitoring device may be configured to transmit and/or receive electromagnetic radiation with a frequency of at least 0,1 GHz and/or at most 100 GHz.

In further embodiments, the monitoring device is configured to transmit and/or receive electromagnetic radiation with a frequency of at most 50 GHz. This way, an interrogation unit with lower costs may be utilized.

The compartment 3 may be embodied as a cavity resonator 3. The absorber 10 may be positioned within the cavity resonator 3. A metallic grid 4 may be arranged between the compartment 3 and the rest of the gas chamber 2. The metallic grid 4 has the purpose to at least partially block passage of electromagnetic radiation, in particular RF electromagnetic radiation, from the cavity resonator 3 to the rest of the gas chamber 2. The metallic grid 4 may allow for a gas flow between the cavity resonator 3 and the rest of the gas chamber 2.

The interrogation unit 30 may be configured to measure a resonance curve of the cavity resonator. The interrogation unit 30 may be configured to determine the load of the absorber 10 by comparing the frequency of a peak of the resonance curve with a reference frequency. The reference frequency may be a frequency of a peak of a previously measured resonance curve, wherein the previously measured resonance curve may be a resonance curve obtained during a calibration measurement.

The interrogation unit 30 may be configured to determine the load of the absorber 10 by comparing the width of a peak of the resonance curve with a reference width. The reference width may be a width of a peak of a previously measured resonance curve, wherein the previously measured resonance curve may be a resonance curve obtained during a calibration measurement.

In embodiments, the interrogation unit may use one or more further peaks, associated with one or more further resonances, from the resonance curve, to determine the load of the absorber. Thus, the accuracy may be enhanced.

Fig. 1c is a schematic cross-sectional view of a gas-insulated electrical apparatus 1 according to another embodiment of the disclosure. Only differences with respect to Fig. 1b are described.

The monitoring device 20 may include a first antenna 21 and a second antenna 22. The interrogation device may be configured to transmit RF electromagnetic radiation via a first antenna 21 and simultaneously receive RF electromagnetic radiation via the second antenna 22. The first antenna 21 and the second antenna 22 may be arranged so as to face the absorber 10 from an opposite side. Thereby, transmission measurements may be enabled.

In this and in other embodiments, the interrogation unit may further be configured to determine a complex permittivity of the absorber. The interrogation unit may further be configured to determine the load of the absorber by comparing the complex permittivity of the absorber with a reference complex permittivity. The reference complex permittivity may in particular be a complex permittivity measured during a calibration measurement.

In embodiments, the interrogation unit may further be configured to determine the absorption rate of the absorber by comparing a complex permittivity measured at a first point in time with a complex permittivity measured at a second point in time.

In embodiments, the interrogation unit may be configured to determine the load of the absorber by comparing an amplitude of a measured signal with a reference amplitude. The reference amplitude may in particular be an amplitude of a signal measured during a calibration measurement.

The interrogation unit may further be configured to determine the load of the absorber by comparing a phase of a measured signal with a reference phase. The reference phase may in particular be a phase of a signal measured during a calibration measurement.

In embodiments, the interrogation unit may be further configured to determine the absorption rate of the absorber by comparing an amplitude of a signal measured at a first point in time with an amplitude of a signal measured at a second point in time. The interrogation unit may further be configured to determine the absorption rate of the absorber by comparing a phase of a signal measured at a first point in time with a phase of a signal measured at a second point in time.

It may be possible to deduce the rate at which impurities appear in the gas chamber from the absorption rate of the absorber. According to an aspect of the present disclosure, the interrogation unit may be configured to determine the rate at which impurities appear in the gas chamber from the absorption rate of the absorber. This may enable predictions about a future state of the gas-insulated electrical apparatus. As a result, the safety of the gas-insulated electrical apparatus may be improved. Furthermore, service intervals may be timed more precisely and/or efficiently.

According to an aspect of the present disclosure, the interrogation unit may have a network interface for connecting the interrogation unit to a data network.

In the context of the present disclosure, a network interface is in particular to be understood as an interface configured to send digital date to the data network and/or receive digital data to the data network.

Thus, a gas-insulated electrical apparatus may be provided that can for example send data about the current load of the absorber and particularly about the rate at which impurities appear in the gas chamber to a data network.

The data network may be a TCP/IP network such as the Internet. The data network may include distributed storage units such as Cloud. Depending on the application, the Cloud can be in form of public, private, hybrid or community Cloud.

Fig. Id is a schematic cross-sectional view of a gas-insulated electrical apparatus 1 according to another embodiment of the disclosure. Only differences with respect to Fig. 1c are described.

The first antenna 21 and the second antenna 22 may be arranged so as to face the absorber 10 from a same side. Thereby reflection measurements may be enabled.

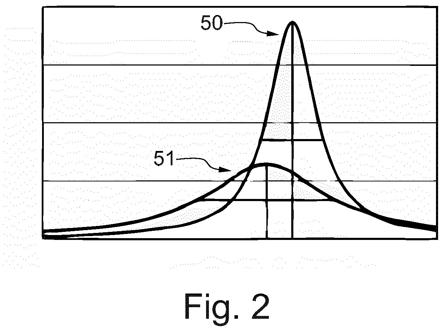

Fig. 2 is a schematic representation of exemplary resonance curves of a cavity resonator as described in the present disclosure. A first resonance curve 50 may be a resonance curve that was obtained during a calibration measurement. In particular, the first resonance curve 50 may be a resonance curve of a cavity resonator that contains an absorber which is in an at least substantially unloaded state. A second resonance curve 51 may be a resonance curve of a cavity resonator that contains an absorber which is loaded for example to 85% or more of its total capacity.

In the following, further possible general aspects, embodiments and variations according to the disclosure are described. Each of these aspects or embodiments can be implemented in combination with any other embodiment, and/or in combination with any other aspect described herein as long as they fall within the scope of the appended claims.

In the context of the present disclosure, a calibration measurement may be understood as a measurement performed on an absorber that is in an at least substantially unloaded state. At least substantially unloaded is particularly to be understood as having a free capacity of more than 75%, preferably more than 85% of the total capacity. The term capacity is in particular to be understood as the capacity to absorb impurities.

In embodiments, the gas-insulated electrical apparatus may include two or more absorbers. The monitoring device may be configured to monitor the respective load of each of the two or more absorbers. Each of the two or more absorbers may be configured to absorb a different impurity present in the insulation gas. This can make it possible to separately monitor the rates at which different impurities appear in the gas chamber.

In embodiments, a first absorber of the two or more absorbers may be a zeolite with a first pore size and a second absorber of the two or more absorbers may be a zeolite with a second pore size, wherein the second pore size differs from the first pore size. For example, the gas-insulated electrical apparatus may include a first absorber for absorbing water and a second absorber for absorbing a corrosive and/or toxic gas.

The monitoring device may include two or more monitoring units. Each of the two or more monitoring units may be configured for non-invasive monitoring of a load of a different absorber. For example, the monitoring device may include a first monitoring unit for non-invasive monitoring of a first zeolite and a second monitoring unit for non-invasive monitoring of a second zeolite.

## Claims

1. A gas-insulated electrical apparatus (1), in particular a switchgear, the gas-insulated electrical apparatus (1) comprising:
a gas chamber (2) filled with an insulation gas;
an absorber (10) for absorbing impurities present in the insulation gas, the absorber (10) being positioned in the gas chamber (2); and a monitoring device (20) comprising one or more antennas (21, 22) for non-invasive monitoring of a load of the absorber (10), wherein monitoring comprises non-invasively measuring a physical property of the absorber (10) or of a compartment (3) of the gas chamber (2), in which the absorber (10) is positioned, wherein the physical property allows conclusions on the load of the absorber (10), and wherein the measuring comprises one or both of transmitting and receiving radio frequency electromagnetic radiation, and
the one or more antennas (21, 22) being configured to be connectable to an interrogation unit (30), the one or more antennas (21, 22) further being configured to transmit and/or receive the radio frequency electromagnetic radiation in connection with the interrogation unit (30).

2. Gas-insulated electrical apparatus (1) according to the preceding claim, the absorber (10) being positioned in a compartment (3) of the gas chamber (2), the compartment (3) being embodied as a cavity resonator (3), the gas-insulated electrical apparatus (1) in particular further comprising a metallic grid (4) arranged between the compartment (3) and the rest of the gas chamber (2).

3. Gas-insulated electrical apparatus (1) according to the preceding claim, comprising the interrogation unit (30) being configured to measure a resonance curve of the cavity resonator (3).

4. Gas-insulated electrical apparatus (1) according to the preceding claim, the interrogation unit (30) being configured to transmit radio frequency electromagnetic radiation via a first antenna (21) and simultaneously receive radio frequency electromagnetic radiation via a second antenna (22).

5. Gas-insulated electrical apparatus (1) according to the preceding claim, the first antenna (21) and the second antenna (22) being arranged so as to both face the absorber (10) from a same side thereby enabling reflection measurements.

6. Gas-insulated electrical apparatus (1) according to the preceding claim 4, the first antenna (21) and the second antenna being arranged so as to each face the absorber (10) from an opposite side thereby enabling transmission measurements, the interrogation unit (30) in particular being configured to determine a complex permittivity of the absorber (10).

7. Gas-insulated electrical apparatus (1) according to any of the four preceding claims, the interrogation unit (30) being configured to determine the load of the absorber (10) by any of:
comparing the frequency of a peak of the resonance curve with a reference frequency,
comparing the width of a peak of the resonance curve with a reference width,
comparing an amplitude of a measured signal with a reference amplitude and
comparing a phase of a measured signal with a reference phase.

8. Gas-insulated electrical apparatus (1) according to any of the five preceding claims, the interrogation unit (30) being configured to determine a rate at which impurities appear in the gas chamber (2), in particular by comparing the load of the absorber (10) at two or more different points in time, thereby particularly enabling predictions about a future state of the gas-insulated electrical apparatus (1).

9. Gas-insulated electrical apparatus (1) according to any of the six preceding claims, the interrogation unit (30) having a network interface for connecting the interrogation unit (30) to a data network, wherein the network interface is configured to send digital data to the data network and/or receive digital data from the data network.

10. Method for monitoring a load of an absorber (10) for absorbing impurities present in an insulation gas of a gas-insulated electrical apparatus (1), the absorber (10) being positioned in a gas chamber (2) of the gas-insulated electrical apparatus (1), the method comprising:
non-invasively measuring a physical property of the absorber (10) or of a compartment (3) of the gas chamber (2), in which the absorber (10) is positioned, wherein the physical property allows conclusions on the load of the absorber (10), and wherein the measuring comprises one or both of transmitting and receiving radio frequency electromagnetic radiation via one or more antennas (21, 22) connected to an interrogation unit (30).

11. Method according to the preceding claim, wherein the absorber (10) is positioned in a compartment (3) of the gas chamber (2), the compartment (3) being embodied as a cavity resonator (3), and wherein the measuring comprises: measuring a resonance curve of the cavity resonator (3).

12. Method according to any of the two preceding claims, wherein the measuring comprises any of a transmission measurement and a reflection measurement, the method further comprising any of comparing an amplitude of a measured signal with a reference amplitude and comparing a phase of a measured signal with a reference phase.

13. Method according to any of the three preceding claims, the method further comprising: determining a rate at which impurities appear in the gas chamber (2), in particular by comparing the load of the absorber (10) at two or more different points in time, thereby particularly enabling predictions about a future state of the gas-insulated electrical apparatus (1).

## Patentansprüche

1. Gasisolierte elektrische Vorrichtung (1), insbesondere Schaltanlage, wobei die gasisolierte Vorrichtung (1) umfasst:
eine Gaskammer (2), die mit einem Isoliergas gefüllt ist;
einen Absorber (10) zum Absorbieren von Verunreinigungen, die im Isoliergas vorhanden sind, wobei der Absorber (10) in der Gaskammer (2) positioniert ist;
eine Überwachungseinrichtung (20), umfassend:
eine oder mehrere Antennen (21, 22) zum nichtinvasiven Überwachen einer Belastung des Absorbers (10), wobei das Überwachen ein nichtinvasives Messen einer physikalischen Eigenschaft des Absorbers (10) oder eines Kompartiments (3) der Gaskammer (2) umfasst, in welchem der Absorber (10) positioniert ist, wobei die physikalische Eigenschaft Rückschlüsse auf die Belastung des Absorbers (10) erlaubt, und wobei das Messen eines von Senden und Empfangen von hochfrequenter elektromagnetischer Strahlung oder beides umfasst, und
wobei die eine oder die mehreren Antennen (21, 22) so ausgelegt sind, dass sie mit einer Abfrageeinheit (30) verbunden werden können, wobei die eine oder die mehreren Antennen (21, 22) ferner so ausgelegt sind, dass sie die hochfrequente elektromagnetische Strahlung in Verbindung mit der Abfrageeinheit (30) senden und empfangen.

2. Gasisolierte elektrische Vorrichtung (1) nach dem vorhergehenden Anspruch, wobei der Absorber (10) in einem Kompartiment (3) der Gaskammer (2) positioniert ist, wobei das Kompartiment (3) als ein Hohlraumresonator (3) realisiert ist, wobei die gasisolierte elektrische Vorrichtung (1) ferner insbesondere ein Metallgitter (4) umfasst, das zwischen dem Kompartiment (3) und dem Rest der Kammer (2) angeordnet ist.

3. Gasisolierte elektrische Vorrichtung (1) nach dem vorhergehenden Anspruch, umfassend, dass die Abfrageeinheit (30) zum Messen einer Resonanzkurve des Hohlraumresonators (3) ausgelegt ist.

4. Gasisolierte elektrische Vorrichtung (1) nach dem vorhergehenden Anspruch, wobei die Abfrageeinheit (30) zum Senden von hochfrequenter elektromagnetischer Strahlung über eine erste Antenne (21) und gleichzeitigem Empfangen von hochfrequenter elektromagnetischer Strahlung über eine zweite Antenne (22) ausgelegt ist.

5. Gasisolierte elektrische Vorrichtung (1) nach dem vorhergehenden Anspruch, wobei die erste Antenne (21) und die zweite Antenne (22) so angeordnet sind, dass sie beide dem Absorber (10) von einer gleichen Seite zugewandt sind, um dadurch Reflexionsmessungen zu ermöglichen.

6. Gasisolierte elektrische Vorrichtung (1) nach Anspruch 4, wobei die erste Antenne (21) und die zweite Antenne so angeordnet sind, dass sie dem Absorber (10) jeweils von einer gegenüberliegenden Seite zugewandt sind, um dadurch Transmissionsmessungen zu ermöglichen, wobei die Abfrageeinheit (30) insbesondere zum Bestimmen einer komplexen Permittivität des Absorbers (10) ausgelegt ist.

7. Gasisolierte elektrische Vorrichtung (1) nach einem der vier vorhergehenden Ansprüche, wobei die Abfrageeinheit (30) zum Bestimmen der Belastung des Absorbers (10) durch eines von Folgendem ausgelegt ist:
Vergleichen der Frequenz einer Spitze der Resonanzkurve mit einer Bezugsfrequenz,
Vergleichen der Breite einer Spitze der Resonanzkurve mit einer Bezugsbreite,
Vergleichen einer Amplitude eines gemessenen Signals mit einer Bezugsamplitude und
Vergleichen einer Phase eines gemessenen Signals mit einer Bezugsphase.

8. Gasisolierte elektrische Vorrichtung (1) nach einem der fünf vorhergehenden Ansprüche, wobei die Abfrageeinheit (30) so ausgelegt ist, dass sie eine Rate, mit welcher Verunreinigungen in der Gaskammer (2) auftreten, insbesondere durch Vergleichen der Belastung des Absorbers (10) zu zwei oder mehr verschiedenen Zeitpunkten bestimmt, um dadurch insbesondere Vorhersagen über einen zukünftigen Zustand der gasisolierten elektrischen Vorrichtung (1) zu ermöglichen.

9. Gasisolierte elektrische Vorrichtung (1) nach einem der sechs vorhergehenden Ansprüche, wobei die Abfrageeinheit (30) eine Netzwerkschnittstelle zum Verbinden der Abfrageeinheit (30) mit einem Datennetzwerk aufweist, wobei die Netzwerkschnittstelle zum Senden von digitalen Daten an das Datennetzwerk und/oder Empfangen von digitalen Daten vom Datennetzwerk ausgelegt ist.

10. Verfahren zur Überwachung einer Belastung eines Absorbers (10) zum Absorbieren von Verunreinigungen, die in einem Isoliergas einer gasisolierten elektrischen Vorrichtung (1) vorhanden sind, wobei der Absorber (10) in einer Gaskammer (2) der gasisolierten elektrischen Vorrichtung (1) positioniert ist, und das Verfahren umfasst:
nichtinvasives Messen einer physikalischen Eigenschaft des Absorbers (10) oder eines Kompartiments (3) der Gaskammer (2), in welchem der Absorber (10) positioniert ist, wobei die physikalische Eigenschaft Rückschlüsse auf die Belastung des Absorbers (10) erlaubt, und wobei das Messen eines von Senden und Empfangen von hochfrequenter elektromagnetischer Strahlung oder beides über eine oder mehrere Antennen (21, 22) umfasst, die mit einer Abfrageeinheit (30) verbunden sind.

11. Verfahren nach dem vorhergehenden Anspruch, wobei der Absorber (10) in einem Kompartiment (3) der Gaskammer (2) positioniert ist, wobei das Kompartiment (3) als ein Hohlraumresonator (3) realisiert ist, und wobei das Messen umfasst: Messen einer Resonanzkurve des Hohlraumresonators (3).

12. Verfahren nach einem der zwei vorhergehenden Ansprüche, wobei das Messen eine von einer Transmissionsmessung und einer Reflexionsmessung umfasst, wobei das Verfahren ferner ein Vergleichen einer Amplitude eines gemessenen Signals mit einer Bezugsamplitude und Vergleichen einer Phase eines gemessenen Signals mit einer Bezugsphase umfasst.

13. Verfahren nach einem der drei vorhergehenden Ansprüche, wobei das Verfahren ferner umfasst: Bestimmen einer Rate, mit welcher Verunreinigungen in der Gaskammer (2) auftreten, insbesondere durch Vergleichen der Belastung des Absorbers (10) zu zwei oder mehr verschiedenen Zeitpunkten, um dadurch insbesondere Vorhersagen über einen zukünftigen Zustand der gasisolierten elektrischen Vorrichtung (1) zu ermöglichen.

## Revendications

1. Appareil électrique à isolation gazeuse (1), en particulier un appareil de commutation, l'appareil électrique à isolation gazeuse (1) comprenant :
une chambre à gaz (2) remplie d'un gaz d'isolation ;
un absorbeur (10) pour absorber des impuretés présentes dans le gaz d'isolation, l'absorbeur (10) étant positionné dans la chambre à gaz (2) ; et
un dispositif de surveillance (20) comprenant une ou plusieurs antennes (21, 22) pour la surveillance non invasive d'une charge de l'absorbeur (10),
la surveillance comprenant la mesure non invasive d'une propriété physique de l'absorbeur (10) ou d'un compartiment (3) de la chambre à gaz (2), dans lequel l'absorbeur (10) est positionné, la propriété physique permettant des conclusions sur la charge de l'absorbeur (10), et la mesure comprenant l'une ou les deux de l'émission et de la réception d'un rayonnement électromagnétique radiofréquence, et la ou les antennes (21, 22) étant configurées pour pouvoir être connectées à une unité d'interrogation (30), la ou les antennes (21, 22) étant en outre configurées pour émettre et/ou recevoir le rayonnement électromagnétique radiofréquence en liaison avec l'unité d'interrogation (30).

2. Appareil électrique à isolation gazeuse (1) selon la revendication précédente, l'absorbeur (10) étant positionné dans un compartiment (3) de la chambre à gaz (2), le compartiment (3) étant réalisé comme un résonateur à cavité (3), l'appareil électrique à isolation gazeuse (1) comprenant en particulier en outre une grille métallique (4) agencée entre le compartiment (3) et le reste de la chambre à gaz (2).

3. Appareil électrique à isolation gazeuse (1) selon la revendication précédente, comprenant l'unité d'interrogation (30) configurée pour mesurer une courbe de résonance du résonateur à cavité (3).

4. Appareil électrique à isolation gazeuse (1) selon la revendication précédente, l'unité d'interrogation (30) étant configurée pour émettre un rayonnement électromagnétique radiofréquence par l'intermédiaire d'une première antenne (21) et recevoir simultanément un rayonnement électromagnétique radiofréquence par l'intermédiaire d'une seconde antenne (22).

5. Appareil électrique à isolation gazeuse (1) selon la revendication précédente, la première antenne (21) et la seconde antenne (22) étant agencées de manière à faire face toutes deux à l'absorbeur (10) depuis un même côté, permettant ainsi des mesures de réflexion.

6. Appareil électrique à isolation gazeuse (1) selon la revendication précédente 4, la première antenne (21) et la seconde antenne étant agencées de manière à faire face chacune à l'absorbeur (10) depuis un côté opposé permettant ainsi des mesures de transmission, l'unité d'interrogation (30) étant notamment configurée pour déterminer une permittivité complexe de l'absorbeur (10).

7. Appareil électrique à isolation gazeuse (1) selon l'une quelconque des quatre revendications précédentes, l'unité d'interrogation (30) étant configurée pour déterminer la charge de l'absorbeur (10) par l'un quelconque des moyens suivants :
la comparaison de la fréquence d'un pic de la courbe de résonance avec une fréquence de référence,
la comparaison de la largeur d'un pic de la courbe de résonance avec une largeur de référence,
la comparaison d'une amplitude d'un signal mesuré avec une amplitude de référence et
la comparaison d'une phase d'un signal mesuré avec une phase de référence.

8. Appareil électrique à isolation gazeuse (1) selon l'une quelconque des revendications précédentes, l'unité d'interrogation (30) étant configurée pour déterminer une vitesse à laquelle les impuretés apparaissent dans la chambre à gaz (2), en particulier en comparant la charge de l'absorbeur (10) à deux ou plus de deux moments différents, permettant ainsi en particulier des prédictions sur un état futur de l'appareil électrique à isolation gazeuse (1).

9. Appareil électrique à isolation gazeuse (1) selon l'une quelconque des six revendications précédentes, l'unité d'interrogation (30) ayant une interface réseau pour connecter l'unité d'interrogation (30) à un réseau de données, l'interface réseau étant configurée pour envoyer des données numériques au réseau de données et/ou recevoir des données numériques à partir du réseau de données.

10. Procédé de surveillance d'une charge d'un absorbeur (10) destiné à absorber des impuretés présentes dans un gaz d'isolation d'un appareil électrique à isolation gazeuse (1), l'absorbeur (10) étant positionné dans une chambre à gaz (2) de l'appareil électrique à isolation gazeuse (1), le procédé comprenant :
la mesure non invasive d'une propriété physique de l'absorbeur (10) ou d'un compartiment (3) de la chambre à gaz (2), dans laquelle l'absorbeur (10) est positionné, la propriété physique permettant de tirer des conclusions sur la charge de l'absorbeur (10), et la mesure comprenant l'une ou les deux opérations d'émission et de réception d'un rayonnement électromagnétique radiofréquence par l'intermédiaire d'une ou plusieurs antennes (21, 22) connectées à une unité d'interrogation (30).

11. Procédé selon la revendication précédente, l'absorbeur (10) étant positionné dans un compartiment (3) de la chambre à gaz (2), le compartiment (3) étant réalisé sous la forme d'un résonateur à cavité (3), et la mesure comprenant : la mesure d'une courbe de résonance du résonateur à cavité (3).

12. Procédé selon l'une quelconque des deux revendications précédentes, la mesure comprenant l'une quelconque d'une mesure de transmission et d'une mesure de réflexion, le procédé comprenant en outre l'une quelconque de la comparaison d'une amplitude d'un signal mesuré avec une amplitude de référence et de la comparaison d'une phase d'un signal mesuré avec une phase de référence.

13. Procédé selon l'une quelconque des trois revendications précédentes, le procédé comprenant en outre : la détermination d'une vitesse d'apparition des impuretés dans la chambre à gaz (2), en particulier par comparaison de la charge de l'absorbeur (10) à deux ou plus de deux instants différents, permettant ainsi en particulier des prédictions sur un état futur de l'appareil électrique à isolation gazeuse (1).
